# EUROPEAN PATENT SPECIFICATION

(11) **EP 0 820 548 B1**
(45) Date of publication and mention of the grant of the patent: **10.02.1999**
(21) Application number: 96910031.2
(22) Date of filing: 09.04.1996
(51) Int. Cl.: E01C 13/08, A01G 1/00

(54) **A COMPOSITION FOR THE NUTRITIVE LAYER OF GRASS SWARD**
ZUSAMMENSETZUNG FÜR DIE ERNÄHRUNGSSCHICHT VON GRASFELDERN
COMPOSITION POUR LA COUCHE NUTRITIVE DU GAZON

(30) Priority: 11.04.1995 EP 95830139
(43) Date of publication of application: 28.01.1998
(73) Proprietor: Cornaro, Vittorio Federico, 21013 Gallarate, Varese (IT)
(72) Inventor: Cornaro, Vittorio Federico, 21013 Gallarate, Varese (IT)
(74) Representative: Ferreccio, Rinaldo
(86) International application number: EP9601508
(87) International publication number: WO9632540

(56) References cited:
- DE-A- 4 012 286
- DE-A- 4 201 399
- FR-A- 2 666 830
- NL-A- 8 500 946

## Description

In its most general aspect the present invention relates to the production of grass swards for surfaces suitable for sporting activities such as golf, football, rugby, horse riding, horse racing, polo etc or public parks or gardens or grassed areas for motor vehicle parking.

In particular the invention relates to a composition of solid materials for the production of the surface layer of grounds laid to grass such as those discussed above, in which layer the grass plants are seeded and take root and which is commonly called the "nutritive layer" or "substratum".

A nutritive layer comprising foam layer and vegetable soil is described by NL 8 500 946 A. However, no specific ranges of percentage with regard to the composition are limited as in NL 8 500 946 A.

For ease of explanation reference will be made hereinafter to the production of a nutritive layer for grounds suitable for playing golf, but what is illustrated in this regard is relevant in general for any type of ground with a grass sward.

It is known that the ground for golf courses comprises a deep drainage layer generally constituted by pebbles, gravel, broken bricks and coarse sand, into which is fitted a system of perforated tubes for the purpose of collecting and conveying excess water.

Over the drainage layer is a nutritive layer having a thickness of about 20-40cm, constituted principally by a mixture of peat and sand. The grass plants are sown and caused to root in the said nutritive layer by suitable application of fertilisers to the surface of this nutritive layer and to rolling and watering operations (see for example Mario Vietti "I1 prato ornamentale", De Agostini, 1991).

It is likewise known that the quality of the sward in current golf courses tends to deteriorate inexorably in only a few years, above all as far as the resistance of the plants to trampling and uprooting is concerned.

The causes of this deterioration in quality are to be found in the progressive compaction of the nutritive layer which prevents the plants from rooting deeply and consequently from anchoring themselves firmly to the ground.

In turn compaction of the nutritive layer is due to the different specific gravity of the two fundamental components of which it is constituted, that is peat and sand. This latter, being heavier, tends to sediment and to form a deep heavily compacted layer which prevents deep penetration of the roots of the grass plants and also prevents penetration of the nutritive substances introduced into the ground by the application of fertiliser to the surface. The heavy compaction of the nutritive layer also obstructs the drainage of the ground.

Consequently, the roots of the grass plants tend to orientate always in a direction parallel to the surface of the ground both because they cannot succeed in penetrating the lower compacted layers and also because they find the nutrients only in the layers closer to the surface. Consequently the horizontal development of the roots of the plants creates, immediately below the ground surface, a layer constituted almost exclusively of closely interwoven roots, which contributes to the further compaction of the nutritive layer and in time causes choking of the plants.

Moreover, because of the poor development in depth of the roots the plants offer very little resistance to mechanical stresses such as trampling or abrasion, and tend to be easily pulled out.

In order to try and slow down the choking of the plants and to reactivate, at least in part, the drainage, it is usual to pierce the ground with operations known as "verticut" using suitable machinery, in such a way as to create pores which allows root development and facilitate drainage.

These techniques, as well as being costly from the point of view of manual labour employed, constitute only a partial and temporary remedy to the above-indicated problem of compaction of the ground and choking of the plants.

The problem on which the present invention is based is that of making available a composition for the nutritive layer of grass sward which obviates the disadvantages set out above with reference to the prior art.

This problem is resolved, according to the invention, by a composition comprising a percentage by volume of 40-80% of volcanic gravel and 0.8-60% of green vegetable compost.

The percentage of green vegetable compost for most applications preferably ranges from 20 to 60%.

Preferably the composition according to the invention also includes up to 15% by volume of pumice in the form of granules.

Preferably the composition of the invention further includes from 2 10⁻³% to 3 10⁻³% by volume of bone meal.

A particularly preferred composition for the purposes of the present invention is set out hereinbelow, in percentages by volume:

| | |
|---|---|
| Volcanic gravel | 40 - 50 |
| Green vegetable compost | 20 - 35 |
| Pumice sand | 10 - 15 |
| Granular pumice | 8 - 12 |
| Silted soil | 0 - 10 |
| Manure | 8 - 12 |
| Bone meal | 0.002 - 0.003 |
| Chemical fertilisers | 0.0002 - 0.001 |

The present invention also relates to a method for the production of grass sward comprising the steps of:
- providing, in a conventional manner, a drainage layer having suitable drainage devices
- depositing a nutritive layer onto the said drainage layer and proceeding with conventional operations of seeding, rolling and the like,
wherein said nutritive layer is constituted by the composition described hereinabove.

The volcanic gravel mentioned above is constituted by volcanic materials of intrusive and/or effusive origin, is highly mineralised, chemically inert, permeable and has a high thermal inertia. The grain size of the volcanic gravel is of more than 1mm and preferably of 1-4mm.

An example of commercially available volcanic gravel usable for the purposes of the present invention is constituted by the product VULCASOIL of the firm Europomice s.r.l. of Turin.
Another example is constituted by lapillus or lava.

The volcanic sand used in the composition of the present invention is of the same nature as the volcanic gravel, but has a grain size of up to 1 mm.

The green vegetable compost included in the composition according to the invention, also called just "compost" is a product obtained by first anaerobic and then aerobic decomposition of chopped fresh vegetable detritus. The decomposition process takes 40-60 days after which the decomposed mass is aerated, sieved on rotary sieves, washed and stored in heaps. The manner of preparation of green vegetable compost is defined in a suitable EEC directive (N.91/156).

The compost preferably contains 6-12% of nitrogen, 10-15% of organic substance and 25-37% of raw fibre.

The pumice sand presents preferably a grain size of 0.5-1.5mm, whilst the pumice granules have an average diameter of 5-14mm.

The silt soil included in the composition according to the invention is constituted by soil of sedimentary origin, which contains at least 30% of silt. It is generally obtained from river deltas and sieved to eliminate stones having a diameter greater than 0.5mm.

The manure utilised for the purposes of the present invention is preferably constituted by cowshed or horse stable manure matured for at least six months; this manure must preferably come from stables in which one or more of the following materials is utilised as a bedding: cereal straw, wood chips, pine bark or sawdust. Moreover, it is preferable in any case to use sterilised manure to guarantee the absence of unwanted weed plant seeds.

The bone meal is obtained by grinding animal bone and horny substances such as horn and hooves. Preferably a bone meal is used having an organic content of 32-44% and a nitrogen content equal to 12-44%.

The chemical fertiliser is preferably made of products rich in phosphorous, such as, for example, the product commercially available under the name AGROSIL ® to facilitate a rapid development of the root system of the grass plants, and products rich in organic nitrogen having an extended action such as, for example, the commercial fertilisers under the name NITROPHOSKAGOLD®, to ensure an adequate reserve of nitrogen for the plants.

The composition according to the invention allows all the above mentioned disadvantages described with reference to the prior art to be overcome.

In particular, the substitution of components traditionally used to form the nutritive layer for grass sward, that is sand and peat, with volcanic gravel and green vegetable compost avoids compaction of the ground which took place because of the sedimentation of the sand. In fact, volcanic gravel and compost have specific gravities very close to one another so as not to cause any sedimentation phenomena.

Consequently the ground remains soft and permeable and the roots of the grass plants are free to penetrate deeply into its interior.

Drainage is maintained at optimum levels over time, thereby allowing nutrient substances introduced as top dressings to diffuse uniformly and to permeate even into the deepest layers. In this way the plant roots are encouraged to develop deeply for the purpose of gaining access to the nutrient substances.

The nutrient layer prepared with the composition according to the invention confers significant elasticity to the sward and high resistance to loads, and prevents it from getting boggy. This converts into an increased security for the sporting users and to a reduction in the occurrence of trauma and lesions from accidental injury in the performance of athletic or horse sports because users are protected from the excessive stresses which arise on excessively hard and dry or excessively wet and yielding ground.

The pumice, in the form of sand or granules, has a high degree of permeability but at the same time confers on the composition according to the invention a significant capacity to retain moisture and to release it progressively in dependence on the requirements of the plants. Moreover it has no tendency to bind with other components of the ground and this avoids phenomena of compaction even under high loads.

All this contributes to the provision in the nutritive layer constituted by the composition according to the invention of an aerated structure which remains constant over time and significantly eases possible spiking and "verticut" operations.

Finally the pumice, thanks to its low specific gravity, has no tendency to sediment within the nutritive layer.

The bone meal, which is preferably contained in the composition according to the invention, serves to constitute a reserve of nutritive substances given up slowly, which guarantees the balanced development and maintenance of the grass and which, given its uniform distribution within the nutritive layer, accentuates the tendency for deep rooting of the grass plants.

A further nutritional supply comes from other components which can advantageously be included in the composition, constituted by manure and suitable chemical fertilisers.

The composition according to the invention can be prepared by uniformly mixing the various components with apparatus of conventional type and can then be stored in silos as such or packaged into sacks of plastics material before being sent to the site where it is to be used, that is to say to the ground on which a nutritive layer for lawn or grass sward is to be formed.

Alternatively, the composition can be prepared on site by mixing the various components with apparatus suitable for field use.

The composition according to the invention and the method for the production of a nutritive layer for lawns using it will be further described making reference to various examples provided hereinbelow for the purpose of illustration and not of limitation.

### EXAMPLE 1

Two plots of ground of 10m² forming part of a golf course were stripped completely of the nutritive layer in such a way as to leave the underlying drainage layer exposed.

These plots were then covered with the nutritive layer in a conventional manner by depositing over the drainage layer a mixture of equal parts by volume of non-fibrous black peat of "Russian" type and sand having a thickness of 30cm.

This was then seeded with a mixture of seeds constituted by Festuca arundinacea, Agropyron repens, Festuca ovina, Agrostis gigantea e Lolium perennial in equal ratios and in an overall quantity of 100g.

Having completed the seeding, the seeds were covered with 5mm of the said peat and sand mixture and watering and fertilization took place with an 8-24-24 fertiliser.

In parallel the second plot was covered with a nutritive layer by depositing over the drainage layer a mixture according to the invention constituted by 60% of volcanic gravel (VULCASOIL) and 40% of green vegetable compost having a nitrogen content of 9% and an organic substance content of 13%, to a thickness of 30cm.

The plot was then seeded with the same mixture of seeds utilised for the first plot in the same ratios and in the same quantities.

Having completed seeding the seeds were covered with the composition according to the invention defined above to a thickness of 5mm and watering and fertilising took place with the same 8-24-24 fertiliser used for the first plot.

After about 20 days grass plants started to develop in both plots; the growth was controlled and facilitated by periodic watering and fertilizing according to usual agronomic practices, taking care to perform the same treatments on both plots at the same times.

After three months specimens of the nutritive layer were taken from both plots over the entire thickness by boring and the development of the roots within them was evaluated.

From macroscopic observation of the core samples it was established that the development of the roots in the nutritive layer made with the composition of the invention had proceeded predominantly in a vertical sense, whilst the roots present in the conventional nutritive layer showed a clear tendency to development in the horizontal sense.

Moreover, the consistency of the nutritive layer according to the invention was detected to be uniform throughout its depth whereas the deeper portions of the conventional nutritive layer were compacted.

The permeability of the nutritive layers was likewise evaluated utilising the following methods.

On the bottom of a watertight container having a surface of 1 square metre, provided with sides 45cm high was disposed a sheet of sponge rubber of the same surface area and a thickness of 10cm. Over this sheet of sponge rubber was deposited a nutritive layer taken from the first plot, to a thickness of 30cm.

On an identical watertight container carrying on its bottom an identical sheet of sponge rubber was deposited a nutritive layer taken from the second plot to a thickness of 30cm.

The surfaces of the nutritive layers of the two containers were irrigated uniformly with 36 litres of water, that is to say a quantity of water corresponding to 36mm of rain (that of a violent rain storm) and each container was then covered with a sheet of plastics material to prevent evaporation of the water.

After 3 hours the surface of the nutritive layer according to the invention, that is that of the second container, was simply damp as far as the first 10cm of the layer.

The nutritive layer was completely removed from the container and the sponge rubber removed and squeezed between two steel rollers of the type utilized for wringing out the cloths for washing motor vehicles, so as to measure the quantity of water which the sponge had absorbed. This quantity was equal to 22.80 litres.

The water had therefore soaked through at 1.6mm per minute for a transit quantity per square metre equal to 0.126 litres per minute and 13.2 litres of water remained in the nutritive layer.

These values are indicative of an optimum permeability of the layer, which guarantees a good drainage without causing a leaching effect of the ground and consequent impoverishment of the soluble nutritive substances thereof.

The nutritive layer of the first container had, after three hours, 6cm of stagnant water under the ground surface. wringing out the sponge rubber after removal of the nutritive layer from the container resulted in 18.40 litres of water. This indicates that a good 17.6 litres of water had been retained in the nutritive layer and is testimony to an insufficient permeability of the conventional nutritive layer.

### EXAMPLE 2

The ground surface layers of a football field were completely removed in such a way as to reveal the underlying drainage layer.
On this latter was deposited a new nutritive layer having a thickness of 30cm and constituted by the following composition according to the invention, in parts by volume:

| | |
|---|---|
| Volcanic gravel | 40 |
| Green vegetable compost | 29 |
| Pumice sand | 13 |
| Granular pumice | 9 |
| Manure | 8.9965 |
| Bone meal | 0.003 |
| Chemical fertilisers | 0.0005 |

Seeding, watering and similar treatments were then undertaken in a conventional manner similar to those described in the preceding example.

After three months specimens of the nutritive layer were taken through the entire thickness by core samples and the development of the roots within it was evaluated.

From macroscopic observation of the core sample it was established that the roots of the plants had developed in such a way as to reach even to the deepest level of the nutritive layer.

Moreover, the consistency of the nutritive layer was found to be extremely uniform throughout its depth.

The permeability of the nutritive layer was measured after three months from seeding with the same method illustrated in the preceding example, obtaining the following results: the quantity of water retained by the foam rubber was equal to 25.2 litres.

The water had therefore percolated at 1.6mm per minute for a transit quantity per square meter equal to 0.14 litres per minute, and 10.80 litres of water remained in the nutritive layer.

### EXAMPLE 3

The surface ground layers of a horse riding field were completely removed in such a way as to expose the underlying drainage layer. On this latter was deposited a new nutritive layer having a thickness of 30cm and constituted by the following composition according to the invention, in parts by volume:

| | |
|---|---|
| Volcanic gravel | 43.997 |
| Green vegetable compost | 20 |
| Pumice sand | 10 |
| Granular pumice | 8 |
| Silt soil | 10 |
| Manure | 8 |
| Bone meal | 0.002 |
| Chemical fertilisers | 0.001 |

Seeding, watering and like conventional treatments were then performed in a manner similar to that described in the preceding examples.

After three months specimens of the nutritive layer were withdrawn from the entire thickness by boring and the development of the roots within them were evaluated.

From macroscopic observation of the core sample taken it was established that the roots of the plants had developed in such a way as to reach even to the deepest levels of the nutritive layer.

Moreover, the consistency of the nutritive layer was found to be extremely uniform throughout its depth.

The permeability of the nutritive layer was measured after three months from seeding with the same method illustrated in example 1, obtaining the following results: the quantity of water retained by the sponge rubber was equal to 26.20 litres.

The water had therefore flowed through at 1.66mm per minute for a transit quantity per square metre equal to 0.145 litres per minute and 9.8 litres of water remained in the nutritive layer.

### EXAMPLE 4

The surface layers of a green sward area of ground suitable for park-land was completely removed in such a way as to expose the underlying drainage layer. On this was deposited a thickness of 30cm of a new nutritive layer constituted by the following composition according to the invention, in parts by volume:

| | |
|---|---|
| Volcanic gravel | 50 |
| Green vegetable compost | 20 |
| Pumice sand | 10 |
| Granular pumice | 10 |
| Manure | 8.9968 |
| Bone meal | 0.003 |
| Chemical fertilisers | 0.0002 |

Seeding, watering and similar conventional treatments were then performed in a manner similar to that described in the preceding examples.

After three months specimens of the nutritive layer were removed through the entire thickness by boring and the development of the roots within it was evaluated.

From macroscopic observation of the core sample taken it was established that the roots of the plants had developed in such a way as to reach even to the deepest levels of the nutritive layer.

Moreover the consistency of the nutritive layer was found to be extremely uniform throughout its depth.

The permeability of the nutritive layer was measured after three months from seeding using the same method illustrated in example 1, obtaining the following results: the quantity of water retained by the sponge rubber was equal to 24 litres.

The water had therefore flowed at 1.6mm per minute to give a transit quantity per square meter equal to 0.133 litres per minute and 12.00 litres of water remained in the nutritive layer.

### EXAMPLE 5

The ground surface layers of a football field were completely removed in such a way as to reveal the underlying drainage layer.

On this latter was deposited a new nutritive layer having a thickness of 30cm and constituted by the following composition according to the invention, in parts by volume:

| | |
|---|---|
| Volcanic gravel | 80 |
| Volcanic sand | 4.196 |
| Green vegetable compost | 0.8 |
| Granular pumice | 15 |
| Bone meal | 0.003 |
| Chemical fertilisers | 0.001 |

Seeding, watering and similar treatments were then undertaken in a conventional manner similar to those described in the preceding examples.

After three months specimens of the nutritive layer were taken through the entire thickness by core samples and the development of the roots within it was evaluated.

From macroscopic observation of the core sample it was established that the roots of the plants had developed in such a way as to reach even to the deepest level of the nutritive layer.

Moreover, the consistency of the nutritive layer was found to be extremely uniform throughout its depth.

The permeability of the nutritive layer was measured after three months from seeding with the same method illustrated in example 1, obtaining the following results: the quantity of water retained by the foam rubber was equal to 28.5 litres.

The water had therefore percolated at 2.6 mm per minute for a transit quantity per square meter equal to 0.237 litres per minute, and 7.50 litres of water remained in the nutritive layer.

The particular composition used in this example is specially adapted for football fields or horse riding fields which, due to the extremely frequent use which they are submitted to, need a large number of watering operations and very frequent administrations of liquid or microgranulated fertilisers.

The nutritive layer of such fields must therefore show a high drainage rate in order to maintain a low residual moisture thereinside and to avoid any putrefaction risks.

The specific composition of the present example is also particularly suited for obtaining grass swards for surfaces suitable for sporting activities in regions characterised by a high annual rainfall.

## Claims

1. A composition for a nutritive layer of a grass sward, which comprises, in percentage by volume, from 30 to 80% of volcanic gravel and from 0.8 to 60% of green vegetable compost.

2. A composition according to Claim 1, wherein the green vegetable compost is in the range of 20 to 60%.

3. A composition according to Claim 1, which further includes up to 15% by volume of pumice granules.

4. A composition according to Claim 3, which further includes from 2 10⁻³% to 3 10⁻³% by volume of bone meal.

5. A composition according to any of Claims 2 and 4, comprising, in percentages by volume:
| | |
|---|---|
| Volcanic gravel | 40 - 50 |
| Green vegetable compost | 20 - 35 |
| Pumice sand | 10 - 15 |
| Granular pumice | 8 - 12 |
| Silted soil | 0 - 10 |
| Manure | 8 - 12 |
| Bone meal | 0.002 - 0.003 |
| Chemical fertilisers | 0.0002 - 0.001 |

6. A method for making lawns, comprising the steps of:
- providing a drainage layer having suitable drainage devices in a conventional manner,
- depositing a nutritive layer on the said drainage layer and performing conventional operations of seeding, rolling and the like,
wherein said nutritive layer is constituted by a composition according to any of the preceding claims.

## Patentansprüche

1. Zusammensetzung für eine Nährschicht einer Grasnarbe, welche 30 - 80% Vol.-% Vulkangrus und 0,8 - 60% Vol.-% Grünpflanzenkompont umfaßt.

2. Zusammensetzung nach Anspruch 1, in welcher der Grünpflanzenkompost 20 - 60% ausmacht.

3. Zusammensetzung nach Anspruch 1, welche zusätzlich bis zu 15 Vol.-% Bimsgranulat enthält.

4. Zusammensetzung nach Anspruch 3, welche zusätzlich 2 x 10⁻³ bis 3 x 10⁻³ Vol.-% Knochenmehl enthält.

5. Zusammensetzung nach einem der Ansprüche 2 und 4, welche - in Volumenprozent -
| | |
|---|---|
| Vulkangrus | 40 - 50 |
| Grünpflanzenkonpost | 20 - 35 |
| Bimssand | 10 - 15 |
| Bimsgranulat | 8 - 12 |
| Schlammerde | 0 - 10 |
| Stalldünger | 8 - 12 |
| Knochenmehl | 0,002 - 0,003 |
| chemische Düngemittel | 0,0002 - 0,001 |
umfaßt.

6. Verfahren zur Herstellung von Rasen(flächen) in folgenden Stufen:
Schaffen einer Drainageschicht mit geeigneten Drainageeinrichtungen in üblicher bekannter Weise und Ablagern einer Nährschicht auf der Drainageschicht sowie Durchführen üblicher Maßnahmen zum Aussäen, Walzen u.dgl.,
wobei die Nährschicht aus einer Zusammensetzung nach einem der vorhergehenden Ansprüche besteht.

## Revendications

1. Composition pour couche nutritive pour gazon, comprenant en pourcentage en volume de 30 à 80% de gravier volcanique et de 0,8 à 60% de compost de plante verte.

2. Composition selon la revendication 1, dans laquelle la partie de compost de plante verte est comprise entre 20 et 60%.

3. Composition selon la revendication 1, comprenant en outre jusqu'à 15% en volume de granulé de pierre ponce.

4. Composition selon la revendication 3, comprenant en outre de 2.10⁻³% à 3.10⁻³% d'engrais de cendre d'os.

5. Composition selon l'une quelconque des revendications 2 et 4 comprenant, en pourcentages en volume :
40-50% de gravier volcanique
20-35% de compost de plante verte
10-15% de sable de pierre ponce
8-12% de granulé de pierre ponce
0-10% de terrain limoneux
8-12% de fumier
0,002-0,003% d'engrais de cendre d'os
0,0002-0,001% d'engrais chimique

6. procédé pour la préparation de pelouse comprenant les étapes consistant à :
- se pourvoir, de façon conventionnelle, d'une couche de drainage présentant des dispositifs de drainage appropriés.
- déposer une couche nutritive sur ladite couche de drainage et réaliser les opérations conventionnelles d'ensemencement, de passage au rouleau et similaires,
dans lequel ladite couche nutritive est constituée d'une composition selon l'une quelconque des revendications précédentes.
